# EUROPÄISCHE PATENTANMELDUNG

(11) **EP 3 771 346 A1**
(43) Veröffentlichungstag der Anmeldung: **03.02.2021**
(21) Anmeldenummer: 19189500.2
(22) Anmeldetag: 31.07.2019
(51) Int. Cl.: A23L 19/00, A23L 21/10, A23L 27/00, A23L 29/231, C08B 37/00

(54) **VERFAHREN ZUM HERSTELLEN EINES FRUCHTPRODUKTS UND FRUCHTPRODUKT**

(71) Anmelder: Döhler GmbH, 64295 Darmstadt (DE)
(72) Erfinder: Ahlers, Ann-Sophie, 60323 Frankfurt (DE); Alshawi, Tarek, 64285 Darmstadt (DE); Dr. Bonerz, Daniel, 64625 Bensheim (DE); Richter, Mike, 64295 Darmstadt (DE); Stieler, Jan, 60435 Frankfurt (DE)
(74) Vertreter: Tesch, Sabine

(57) **Zusammenfassung**

Um die gelierende Wirkung von Pektinen auch für sogenannte "Clean Label"-Anwendungen zu ermöglichen und dabei möglichst wirtschaftlich und resourcenschonend vorzugehen stellt die Erfindung ein Verfahren bereit mit folgenden Schritten
a) Bereitstellen einer Masse aus Früchten und/oder zerkleinerten Früchten ohne deren Schalen, Kerne und Stiele,
b) Heißhalten der erhitzten Masse bei einer Temperatur oberhalb von 75°C; bevorzugt oberhalb von 80°C, besonders bevorzugt im Bereich zwischen 94°C und 96°C, über einen Zeitraum im Bereich zwischen 45 Minuten und 180 Minuten, bevorzugt im Bereich zwischen 50 Minuten und 150 Minuten, besonders bevorzugt im Bereich zwischen 60 Minuten und 120 Minuten.

## Beschreibung

Die Erfindung betrifft ein Verfahren zum Herstellen eines Fruchtproduktes gemäß Anspruch 1 sowie ein Fruchtprodukt nach Anspruch 10.

In Küche bzw. Haushalt als auch in der Lebensmittelindustrie werden traditionell Gelier- und Verdickungsmittel, sogenannte Hydrokolloide, zur Erzielung bestimmter Konsistenzen eingesetzt. Geliermittel quellen in Wasser oder binden Wasser und geben dadurch Produkten wie beispielsweise Suppen oder Saucen eine sämige bis sogar feste Konsistenz. Verdickungsmittel hingegen stabilisieren in Lebensmitteln bestimmte Konsistenzen oder Textur. Standardmäßig werden in der Lebensmittelindustrie zum Beispiel Johannisbrotkernmehl (E410), Pektine (E440), Guarkernmehl (E412), Carrageen (E407) oder Gellan (E418) eingesetzt. Dabei handelt es sich in der Regel um Lebensmittelzusatzstoffe. Das Gesundheitsbewusstsein der Verbraucher, ihre kritische Haltung zu Zusatzstoffen und die Möglichkeit für die Industrie, sich mit natürlich wirkenden Produkten vom Wettbewerb abzuheben, haben einen bereits lang anhaltenden Trend ausgelöst, Produkte mit "Clean Label" zu entwickeln. "Clean Label" bedeutet, dass auf den Lebensmitteln möglichst vertraut oder natürlich klingende Zutaten ausgewiesen werden sollen, nach Möglichkeit ohne Einsatz von Zusatzstoffen.

Ein Zusatzstoff mit langer Tradition ist Pektin, das aufgrund seiner vielfältigen Eigenschaften in zahlreichen Produkten im Haushalt und in der Lebensmittelindustrie Verwendung findet. Pektin wird kommerziell vor allem aus Äpfeln, Citrusfrüchten und Zuckerrüben gewonnen. Natürlicherweise kommt Pektin als wesentliches Strukturelement aller pflanzlichen Zellwände auch in vielen anderen Früchten sowohl in Obst als auch in Gemüsen vor.

Chemisch betrachtet ist Pektin eine makromolekulare Verbindung, die zu den Heteropolysacchariden zählt. Hauptbestandteil ist die Polygalacturonsäure, die teilweise mit Methanol verestert ist. Bei einem Veresterungsgrad von über 50% spricht man von hochverestertem Pektin, bei einem Veresterungsgrad unter 50% spricht man von niederverestertem Pektin. Der Veresterungsgrad gibt an, zu wie viel Prozent die Galacturonsäureeinheiten mit Methanol verestert sind. Pektine mit hohem Veresterungsgrad bilden bei niedrigem pH -Wert und einem löslichen Trockensubstanzgehalt von über 55% Gele. Niederveresterte Pektine gelieren wie die hochveresterten Pektine ebenfalls nach dem "Zucker-Säure-Geliermechanismus". Zusätzlich sind niederveresterte Pektine auch in der Lage, mit zweiwertigen Kationen wie zum Beispiel Calciumionen, auch bei geringen löslichen Trockensubstanzgehalten, Gele auszubilden.

Kommerziell wird Pektin aus pflanzlichen Rohstoffen in einem mehrstufigen Prozess hergestellt. Dazu wird das getrocknete Ausgangsmaterial üblicherweise zunächst einer Heißextraktion mit verdünnter mineralischer Säure, z.B. Salzsäure oder Salpetersäure, unterworfen. In Abhängigkeit von Temperatur, Zeit, und pH kann dabei wahlweise aus dem natürlicherweise vorkommenden hochveresterten Pektin durch hydrolytische Abspaltung von Methanol niederverestertes Pektin gewonnen werden. Anschließend wird das Pektin nach Abfiltrieren der unlöslichen Bestandteile durch die Zugabe eines Alkohols, z.B. Ethanol oder Isopropanol, aus dem Filtrat ausgefällt, getrocknet und vermahlen.

Nachteilig an derartigen bekannten Gelier- und Verdickungsprodukten und ihrer Herstellung sind die mit dem Einsatz mineralischer Säure und Lauge sowie des Alkohols eingesetzten Technologien zur Isolierung der Hydrokolloide, die sich negativ auf die Nachhaltigkeitsbilanz des Produktes auswirken. Zudem sind derartige herkömmliche Gelier- und Verdickungsprodukte nicht für Anwendungen geeignet, für die ausgelobt werden soll, dass keine Zusatzstoffe eingesetzt werden (sogenannte "Clean Label"-beziehungsweise "E-Nummern-freie" Anwendungen) und die vom Konsumenten verstärkt nachgefragt werden.

Bisherige Ansätze, die vorher genannten Nachteile der Hydrokolloide zu umgehen und somit eine E-Nummern-freie Deklaration zu erhalten" sind beispielsweise die Verwendung von Fruchtpulvern oder Fruchtfasern.

Zur Herstellung von reinen Fruchtpulvern wird das Ausgangsmaterial üblicherweise gefriergetrocknet. Hierzu werden meist Fruchtstücke ohne weitere Zutaten bei sehr tiefen Temperaturen schockgefrostet und dann in einer Gefriertrocknungsanlage auf die gewünschte Trockenmasse getrocknet. Durch den Wasserentzug werden die Inhaltstoffe des Produktes um ein Vielfaches konzentriert. Die natürlicherweise in der Frucht vorhandenen Ballaststoffe sind somit ebenfalls im Fruchtpulver vorhanden.

Die Herstellung von Fruchtfasern erfolgt üblicherweise aus Äpfeln oder Citrusfrüchten. Hierfür werden die Früchte entsaftet ggf. entölt und getrocknet. Diese Ausgangsware wird nach spezieller Reinigung auf definierte Partikelgrößen vermahlen. Fruchtfasern werden meist aufgrund ihres sehr hohen Ballaststoffgehaltes als Ballaststoffzusatz in Lebensmittel eingebracht, auch werden sie als Füll- oder Bindestoffe eingesetzt. Meist besitzen sie noch ihr fruchteignes spezifisches Aroma.

Nachteilig in Bezug auf den Einsatz von Fruchtpulvern bzw. Fruchtfasern als natürliche texturgebende und gelierende Zutat ist der niedrige Gehalt an löslichen Ballaststoffen. Sofern als Rohmaterial ungeschälte Früchte eingesetzt werden, werden dort enthaltene Schadstoffe, wie beispielsweise Pestizidrückstände ebenfalls in dem Fruchtpulver konzentriert.

Es ergibt sich damit eine Aufgabe der Erfindung, ein Fruchtprodukt bereitzustellen, welches viskositätsgebende bis hin zu gelbildenden Eigenschaften besitzt und sich für den E-Nummern-freien Einsatz (Clean Label) eignet. Es ist eine weitere Aufgabe der Erfindung, dabei möglichst wirtschaftlich und resourcenschonend vorzugehen.

Die Erfindung löst diese Aufgaben in überraschend einfacher Weise mit einem Verfahren gemäß Anspruch 1 und einem Fruchtprodukt gemäß Anspruch 10.

Die Erfindung stellt ein Verfahren zum Herstellen eines Fruchtproduktes mit folgenden Schritten bereit:
a) Bereitstellen einer Masse aus Früchten und/oder zerkleinerten Früchten ohne deren Schalen, Kerne und Stiele,
b) Heißhalten der erhitzten Masse bei einer Temperatur oberhalb von 75°C; bevorzugt oberhalb von 80°C, besonders bevorzugt im Bereich zwischen 94°C und 96°C, über einen Zeitraum im Bereich zwischen 45 Minuten und 180 Minuten, bevorzugt im Bereich zwischen 50 Minuten und 150 Minuten, besonders bevorzugt im Bereich zwischen 60 Minuten und 120 Minuten.

Mit diesen Parametern wird das Verfahren gemäß der Erfindung unter Atmosphärendruck, insbesondere bei etwa 1013 hPa durchgeführt.

Der Begriff "Frucht" wird hier entsprechend der Begriffsbestimmung in Anhang II der Richtlinie 2012/12/ EU des Europäischen Parlaments und des Rates vom 19. April 2012 zur Änderung der Richtlinie 2001/112/EG des Rates über Fruchtsäfte und bestimmte gleichartige Erzeugnisse für die menschliche Ernährung verwendet. Soweit nicht anders angegeben werden mit dem Begriff "Frucht" alle Früchte bezeichnet, einschließlich Früchte einjähriger Pflanzen wie Tomaten, die auch als Fruchtgemüse bezeichnet werden. Als "Obst" werden die in rohem Zustand essbaren Früchte mehrjähriger Bäume oder Sträucher bezeichnet. Als "Gemüse" werden alle einjährigen Pflanzen oder Teile von einjährigen Pflanzen bezeichnet, die roh oder verarbeitet der menschlichen Ernährung dienen. Soweit nicht anders angegeben, umfasst der Begriff "Gemüse" damit auch Früchte von einjährigen Pflanzen wie von Tomaten, die auch als "Fruchtgemüse" bezeichnet werden. Für die Erfindung können grundsätzlich alle Früchte verwendet werden, wobei eine Frucht oder eine Mischung aus zumindest zwei Früchten eingesetzt werden kann. Im Rahmen der Erfindung wird somit mit dem Begriff "Frucht" sowohl Obst als auch Gemüse bezeichnet.

Die zerkleinerten Teile können dabei insbesondere mit Fruchtsaft, Kondensat aus der Herstellung konzentrierter Fruchtsäfte, und/oder mit Wasser versetzt dem erfindungsgemäßen Verfahren zugeführt werden. Eine Maische beinhaltet dabei Früchte, insbesondere mit verzehrfähiger Schale. Bevorzugt enthält die Maische Obst, insbesondere mit verzehrfähiger Schale, und bevorzugt besteht die Fruchtzusammensetzung der Maische aus Früchten mit verzehrfähiger Schale, stärker bevorzugt aus Obst mit verzehrfähiger Schale. Solche Früchte mit verzehrfähiger Schale werden bevorzugt ungeschält zu einer Maische verarbeitet.

Als Früchte besonders geeignet sind Kernobst, Steinobst, Beerenobst und/oder Gemüse. Beispiele besonders geeigneter Obstsorten sind für Kernobst Äpfel, Birnen und Quitten, für Steinobst Aprikosen, Pfirsiche, Kirschen, Pflaumen, und Nektarinen, für Beerenobst Brombeeren, Johannisbeeren, Blaubeeren, Preiselbeeren, sowie auch Zitrusfrüchte und Südfrüchte. Beispiele für besonders geeignete Südfrüchte sind Granatapfel, Ananas, Banane, Melonen, Kokosnuss, Passionsfrucht, Mango, Papaya, Litschi, und Kiwi. Beispiele besonders geeigneter Gemüsesorten sind Karotte, Rote Beete, Pastinaken, Blumenkohl, Brokkoli, Zucchini, Tomate, Sellerie, Kohl, Gurke, Zwiebel und Aubergine.

Die Erfindung ermöglicht neben der Verarbeitung von Früchten und/oder zerkleinerten Früchten vorteilhafterweise auch die Verwertung von Nebenströmen, insbesondere Trestern, aus der Obst- und Gemüseverarbeitung. Dadurch wird die Menge der Reststoffe der Fruchtverarbeitung deutlich reduziert. Dadurch kann beispielsweise die Gesamtapfelausbeute durch Direktsaftproduktion und erfindungsgemäßes Herstellen des Fruchtproduktes auf über 95% gesteigert werden. Die Produktion des erfindungsgemäßen texturgebenden Fruchtproduktes ist dabei über die ganze Verarbeitungssaison möglich.

Insbesondere bei der Verwendung von Trestern wird mit Hilfe der Erfindung eine energieaufwändige Trocknung zur Haltbarmachung überflüssig, da der Trester direkt nass weiterverarbeitet wird. Trester sind im nassen Zustand nicht lange lagerfähig, da sie auf Grund der mikrobiellen Ausgangsbeladung schnell verderben. Für eine Weiterverarbeitung muss daher zur Haltbarmachung eine Trocknung durchgeführt werden. Verarbeitung der Trester üblicherweise nicht am Ort der Fruchtverarbeitung statt. Der getrocknete Trester muss also teilweise über weite Strecken zwischen Saftproduzenten und Tresterverarbeiter transportiert werden. Zudem eignet sich nur der Trester aus ungelagertem Obst beziehungsweise Gemüse für die herkömmliche Geliermittelhertellung. Somit sind über 2/3 der anfallenden Trester nicht für eine herkömmliche Pektinextraktion geeignet und werden in der Regel wie oben beschrieben der Weiterverarbeitung zugeführt.

Darauf kann mit Hilfe der Erfindung verzichtet werden, was zu Energie- und Kosteneinsparungen führt und gleichzeitig ein Abfallprodukt wie Trester zu einem dietätisch und technofunktionell hochwertigen Produkt aufwertet. Dabei ermöglicht die Erfindung zudem den maximalen Erhalt des Faser-Anteils der Frucht durch Belassen der unlöslichen Fasern im Produkt.

Die Textur- und Gelierfunktionalität liegt im erfindungsgemäßen Fruchtprodukt vor, ohne dass dazu Hilfsmittel, die in bekannten Verarbeitungsprozessen von Obst- und Gemüserohwaren zu isolierten Hydrokolloiden zwingend notwendig sind, wie etwa Säuren, Laugen oder Alkohole, zugesetzt werden. Alleine Schalen, Kerne und Stiele werden dem eingesetzten pflanzlichen Material entzogen.

In einer vorteilhaften Ausführungsform der Erfindung ist vorgesehen, in Schritt a), insbesondere als Teil des Schrittes a), beispielsweise als Schritt a3), ein Abtrennen von nicht-essbaren Bestandteilen und Schalen aus der Masse aus Früchten und/oder zerkleinerten Früchten durchzuführen. Diese Bestandteile sind für die spätere Anwendung in Endprodukten störend bzw. unerwünscht. Ihre Abtrennung kann insbesondere durch Passieren mit einer Siebweite unterhalb von 5 mm, bevorzugt durch Passieren mit einer Siebweite unterhalb von 3 mm, besonders bevorzugt durch Passieren mit einer Siebweite von 2 mm.

In einer Weiterbildung der Erfindung erfolgt vor Schritt b), insbesondere als Schritt a4), ein Erhitzen der Masse aus Früchten und/oder zerkleinerten Früchten auf eine Temperatur oberhalb von 75°C, bevorzugt oberhalb von 80°C; besonders bevorzugt oberhalb von 95°C, insbesondere im Bereich zwischen 95°C und 98°C. Ein separates Erhitzen erlaubt die besonders präzise Einhaltung der hohen Temperatur über die gesamte in Schritt b) vorgesehene Heißhaltezeit.

Um auch bei Früchten, deren Faserbestandteile, insbesondere Pektine, wasserunlöslich vorliegen, eine Aktivierung dieser im erfindungsgemäßen Heißhalteschritt b) zu erzielen sieht die Erfindung in einer vorteilhaften Weiterbildung vor, dass in Schritt a), insbesondere als Schritt a2), eine Säurezugabe zum Einstellen des pH-Wertes erfolgt. Dabei wird insbesondere ein pH-Wert im Bereich zwischen 3 und 4, bevorzugt ein pH-Wert von 3,6 in der Masse aus Früchten und/oder zerkleinerten Früchten eingestellt. Bevorzugt wird dazu Zitronensäure verwendet.

Um ein optisch ansprechendes Fruchtprodukt bereitzustellen, das auch farblich bei Verwendung in einem Endprodukt nicht störend ist, kann nach einer vorteilhaften Weiterbildung der Erfindung in Schritt a), insbesondere als Teil des Schrittes a), beispielsweise als Schritt a1), das Bereitstellen der Masse aus Früchten und/oder zerkleinerten Früchten unter Bedingungen erfolgen, die einer enzymatischen Bräunung der Masse entgegenwirken, wobei bevorzugt zumindest ein Antioxidationsmittel, besonders bevorzugt Ascorbinsäure, der Masse zugesetzt und/oder die Masse unter Inertgasatmosphäre verarbeitet wird. Dabei erfolgt die Ascorbinsäurezugabe im Rahmen der Erfindung bevorzugt in einer Konzentration von weniger als 600 mg Ascorbinsäure pro kg der gesamten Masse aus Früchten und/oder zerkleinerten Früchten und Ascorbinsäure, bevorzugt in einer Konzentration von maximal 500 mg Ascorbinsäure pro kg der gesamten Masse aus Früchten und/oder zerkleinerten Früchten und Ascorbinsäure.

Als Ausgangsmaterial für das erfindungsgemäße Verfahren können ganze Früchte, Maische, Trester, Püree und Pulpe eingesetzt werden. Damit bietet die Erfindung den großen Vorteil, das Verfahren bei bereits bestehenden Produktionslinien unterschiedlicher Fruchtprodukte nachschalten zu können. Zudem wird die Verwertung verschiedener Restprodukte ermöglicht, die bei der Herstellung anderer Fruchtprodukte anfallen wie beispielsweise Trester bei der Saftherstellung. Dabei kann durch die Erfindung zudem auf die sonst übliche Trocknung des Tresters verzichtet werden.

Eine Maische wird durch das Zerkleinern von Früchten beispielsweise durch Schneiden, Zerdrücken und/oder Vermahlen hergestellt. Durch Entfernen des Saftes aus der Maische bleibt der Trester zurück. Alternativ kann durch Entfernen von Schalen, Kernen und Stielen aus der Maische ein Püree entstehen. Wird aus dem Püree Saft entzogen, entsteht eine Pulpe.

Die Erfindung ermöglicht es, ausgehend von allen genannten Zwischenprodukten der Fruchtverarbeitung ein Fruchtprodukt mit Textur- und Gelierfunktion zu schaffen, indem in Schritt a) insbesondere als Teil des Schrittes a), beispielsweise als Schritt a0), als Masse aus Früchten und/oder zerkleinerten Früchten eine Mischung aus Trester und einem Fluid bereitgestellt wird, wobei das Fluid insbesondere ausgewählt ist aus der Gruppe, welche Wasser, Saft, Püree, Pulpe, Saftkonzentrat und Kondensat aus der Herstellung konzentrierten Saftes sowie Mischungen aus den genannten Fluiden umfasst. Der Begriff "Fluid" umfasst hier Flüssigkeiten sowie Suspensionen, Gele und Pasten, solange sie in der Mischung mit der Masse aus Früchten und/oder zerkleinerten Früchten in für den Fachmann verständlicher Weise fließ- beziehungsweise pumpfähig sind.

Um auch sehr kleine nicht-essbare Bestandteile, sogenannte Defekte, aus dem Fruchtprodukt zu entfernen, so dass diese im Wesentlichen keine das Mundgefühl beim Verzehr eines Endproduktes mit dem Fruchtprodukt störende Komponenten mehr enthält, kann gemäß einer Weiterbildung des erfindungsgemäßen Verfahrens ein zusätzlicher Schritt
c) Abtrennen von restlichen nicht-essbaren Bestandteilen aus dem Fruchtprodukt, bevorzugt durch Passieren mit einer Siebweite unterhalb von 1 mm, besonders bevorzugt durch Passieren mit einer Siebweite von 0,5 mm
durchgeführt werden.

Die Erfindung bietet des Weiteren den Vorteil, den Veresterungsgrad der Pektine des Fruchtproduktes abgestimmt auf den gewünschten Einsatz im Endprodukt bereitzustellen. Dazu ist gemäß einer Weiterbildung des Verfahrens das Durchführen einer Enzymbehandlung als Schritt e) vorgesehen, insbesondere zur Entesterung des Pektins, wobei bevorzugt dem Fruchtprodukt zumindest ein Enzym mit Pektin-Methylesterase -Funktion, insbesondere zumindest eine Pektin-Methylesterase (PME) zugesetzt wird.

Zum definierten Beenden der erfindungsgemäßen Heißhaltezeit kann das oben beschriebene Verfahren den weiteren Schritt d) einer Abkühlung des Fruchtproduktes nach dem Heißhalten auf eine Temperatur unterhalb von 40°C, bevorzugt auf eine Temperatur im Bereich von 30°C bis 40°C, besonders bevorzugt auf eine Temperatur im Bereich von 33°C bis 37°C, insbesondere auf eine Temperatur von 35°C, umfassen. Insbesondere kann das Abkühlen vor oder nach dem letzten Passierschritt bei der dafür bevorzugten Siebweite 0,5 mm durchgeführt werden.

Die Erfindung stellt des Weiteren ein Fruchtprodukt bereit, welches insbesondere mit einem oben beschriebenen Verfahren hergestellt ist, umfassend im Wesentlichen alle wasserunlöslichen Bestandteile einer Frucht oder einer Mischung aus Früchten außer deren nicht-essbaren Bestandteilen, insbesondere außer Schalen, Kernen und/oder Stielen, welches ein "Kohlenhydrat zu Ballaststoffe-Verhältnis im Bereich von 0,6 bis 4,7, bevorzugt im Bereich von 0,6 bis 3,5, besonders bevorzugt im Bereich von 0,6 bis 2,5 hat.

Das erfindungsgemäße Fruchtprodukt hat dabei eine fruchttypische Gesamtzusammensetzung, beispielsweise mit den Komponenten Cellulose, Hemicellulose, Pektinen, organischen Säuren, Fruchtzuckern, sekundären Pflanzeninhaltsstoffen und/oder Mineralien.

Das "Kohlenhydrat zu Ballaststoff"-Verhältnis wird bestimmt als Gesamtgehalt an verdaulichen Kohlenhydraten (also Saccharose, Fructose, Glucose, Stärke und/oder Zuckeralkohole) geteilt durch den Gehalt an Gesamtballaststoffen nach der Methode AOAC 991.43.

In einer vorteilhaften Weiterbildung weist das erfindungsgemäße Fruchtprodukt ein Verhältnis von löslichen Ballaststoffen zu unlöslichen Ballaststoffen im Bereich von 0,15 bis 1,5, bevorzugt im Bereich von 0,25 bis 1,1, besonders bevorzugt im Bereich von 0,35 bis 1,0 auf. Der Gehalt an löslichen Ballaststoffen und der Gehalt an unlöslichen Ballaststoffen wird jeweils nach Methode AOAC 991.43 bestimmt. In dem erfindungsgemäßen Fruchtprodukt ist insbesondere ein möglichst großer Teil der wasserunlöslichen Pektine des Ausgangsmaterials in Form wasserlöslicher Pektine enthalten, was sich im Verhältnis der löslichen Ballaststoffe zu unlöslichen Ballaststoffen zeigt.

Die folgende Übersicht gibt typische Werte für den Fruchtgehalt, Ballaststoffgehalt und den Gehalt an Kohlehydraten für herkömmliche Fruchtpulver und Fruchtfasern im Vergleich zum erfindungsgemäßen Fruchtprodukt an.

| | Fruchtpulver | Fruchtfaser | Fruchtprodukt |
|---|---|---|---|
| Fruchtgehalt | Ja | Nein | Ja |
| Ballaststoffgehalt | < 15 % | > 50 % | > 15 % < 50 % |
| Kohlenhydratgehalt | > 75 % | < 30 % | > 30 % bis 70 % |

Nativ besteht in Pflanzen eine Bindung unter Anderem zwischen Pektinen und Cellulose, wodurch diese wasserunlöslich sind. Bei der Extraktion von Pektinen aus den pflanzlichen Geweben werden diese Bindungen aufgebrochen und die Pektine werden wasserlöslich.

Das erfindungsgemäße Fruchtprodukt besitzt somit eine Textur- und Gelierfunktionalität. Der Begriff "Textur-" beziehungsweise "Gelierfunktionalität" bedeutet, dass in Lebensmittelanwendungen eine Viskositätssteigerung bis hin zur Gelbildung bewirkt wird.

Das erfindungsgemäße Fruchtprodukt mit Textur- und Gelierfunktionalität bietet ein natürliches Texturierungs- und Gelierungssystem auf Obst- und Gemüsebasis. Im Wesentlichen alle ernährungsphysiologisch wertgebenden Fasern (also die Gesamtballaststoffe) des Ausgangsmaterials werden gemäß der Erfindung in dem Fruchtprodukt belassen. Im Rahmen der Erfindung wird vorzugsweise alleine die Schale der eingesetzten Frucht oder Früchte abgetrennt, und alles nach Abtrennung der Schale verbleibende faserhaltige, insbesondere ballaststoffhaltige Material ist im erfindungsgemäßen Fruchtprodukt enthalten.

Das Fruchtprodukt ist ein Fruchtfleisch-Produkt, das Textur- und Gelierfunktionalität aufweist, ohne dass aufwändige beziehungsweise nachteilige Extraktions- und/oder Abtrennprozesse durchgeführt werden müssen. Im Gegenteil, durch den Verzicht auf die Abtrennung (abgesehen von der Abtrennung der nicht-essbaren Bestandteile und Schalen) wird ein Fruchtgehalt beibehalten und durch die Erfindung ein texturierendes und gelierendes Lebensmittel geschaffen.

Dadurch, dass das funktionalisierte Pektin nicht von den Fruchtfleischbestandteilen getrennt wird, behalten die erfindungsgemäßen Fruchtprodukte einen Fruchtgehalt, der in der Endapplikation, das heißt in einem Endprodukt mit dem erfindungsgemäßen Fruchtprodukt, entsprechend deklariert werden kann. Durch die Funktionalisierung der Pektin- und Faserfraktion und der fruchteigenen beziehungsweise fruchttypischen Gesamtkomposition (zum Beispiel mit Cellulose, Hemicellulose, organischen Säuren, Fruchtzuckern und/oder Mineralien) der erfindungsgemäßen Fruchtprodukte kann beispielsweise in Fruchtzubereitungen auf den Einsatz von Zusatzstoffen wie Zitronensäure und Natriumcitrat verzichtet werden. Die erfindungsgemäßen Fruchtprodukte sind also für den Einsatz in Clean-Label beziehungsweise E-Nummern-freien Applikationen besonders gut geeignet.

Bei dem Fruchtprodukt kann es sich in vorteilhafter Weise um ein, insbesondere getrocknetes, Apfelfruchtprodukt handeln, welche im Vergleich mit einem Apfelpulver hergestellt aus getrockneten ungeschälten Äpfeln bei gleicher eingesetzter Menge in einem Endprodukt zu einer um das 1,45-fache bis zu einer um das 4,6-fache erhöhten Viskosität des Endproduktes führt.

Die Angabe "gleiche eingesetzte Menge" bezieht sich dabei auf die gleiche Menge an Trockenmasse.

Die Viskosität des Endproduktes wird je nach zu erwartendem Fließverhalten des Endproduktes entweder mittels des Viskosimeters "Brookfield DV-II" mit Spindel S62 bei 50 Umdrehungen pro Minute bei 25°C oder mittels des Rheometers "Anton Paar MCR102" mit Messzylinder CC27 bei einer Scherrate von 30 pro Sekunde und 20 °C gemessen.

Ein erfindungsgemäßes, insbesondere getrocknetes, Apfelfruchtprodukt führt im Vergleich zu Apfelfasern hergestellt aus getrocknetem Apfeltrester bei gleicher eingesetzter Menge in einem Endprodukt in überraschender Weise zu einer um das 1,16-fache bis zu einer um das 6-fache erhöhten Viskosität des Endproduktes.

Des Weiteren ist das erfindungsgemäße , insbesondere getrocknete, Apfelfruchtprodukt in vorteilhafter Weise backstabil, was sich darin zeigt, dass eine Probe von 10 g eines das Apfelfruchtprodukt enthaltenden Endproduktes nach 8 Minuten Backen bei 200°C Ober-/Unterhitze in ihrer räumlichen Ausdehnung im Wesentlichen unverändert ist.

Die Erfindung stellt damit ein Fruchtprodukt bereit, das mit seinen texturgebenden Eigenschaften besonders gut geeignet ist zur Verwendung als texturgebende und/oder gelbildende Komponente eines Lebensmittels, welches insbesondere aus der Gruppe ausgewählt ist, die Fruchtzubereitungen, Fruchtaufstriche, Saucen, Getränke, Backwaren, Eiszubereitungen und Süßwaren umfasst.

Die Erfindung wird nachfolgend in Bezug auf die beigefügten Figuren und Ausführungsbeispiele näher erläutert.

Es zeigen:
- Figur 1: ein Fließschema eines ersten Verfahrens zur Herstellung von Fruchtsaft nach dem Stand der Technik,
- Figur 2: ein Fließschema eines zweiten Verfahrens zur Herstellung von Fruchtpüree, Fruchtpulpe und Fruchtsaft nach dem Stand der Technik,
- Figur 3: ein Fließschema des erfindungsgemäßen Verfahrens zum Herstellen eines Fruchtproduktes mit Textur- und/oder Gelierungsfunktionalität,
- Figur 4: ein Fließschema zum Herstellen des erfindungsgemäßen Fruchtproduktes als flüssiges oder trockenes Produkt,
- Figur 5: eine fotographische Aufnahme zur Illustration der Festigkeit einer BBQ-Sauce als Endprodukt unter Einsatz eines erfindungsgemäßen Fruchtproduktes in Form von Apfelfruchtpulver im Vergleich zu Endprodukten, die unter Einsatz einer Referenz beziehungsweise von Apfelpulver oder Apfelfasern hergestellt wurden und
- Figur 6: eine fotografische Dokumentation zur Backstabilität einer "Erdbeerfruchtzubereitung 2" als Endprodukt unter Einsatz eines erfindungsgemäßen Fruchtproduktes in Form von Apfelfruchtpulver im Vergleich zu Endprodukten, die unter Einsatz einer Referenz beziehungsweise von Apfelpulver oder Apfelfasern hergestellt wurden.

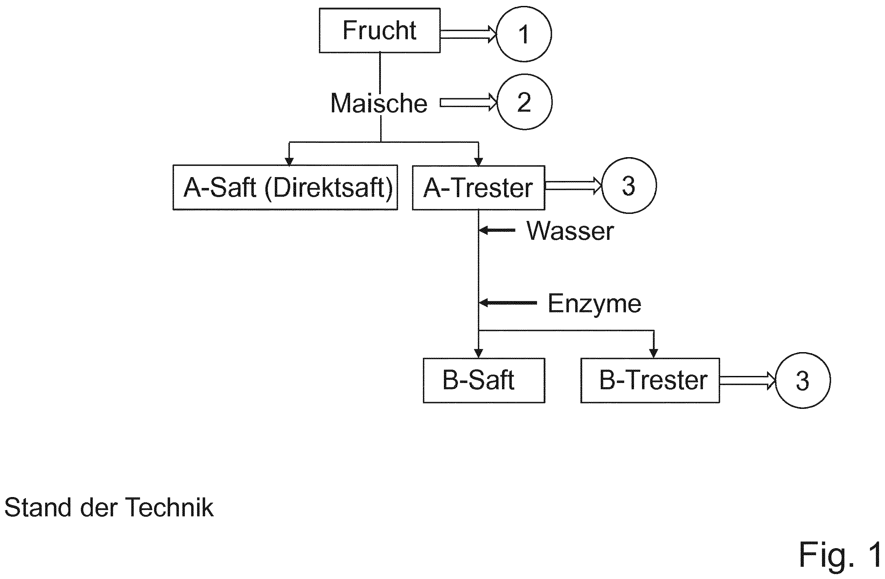

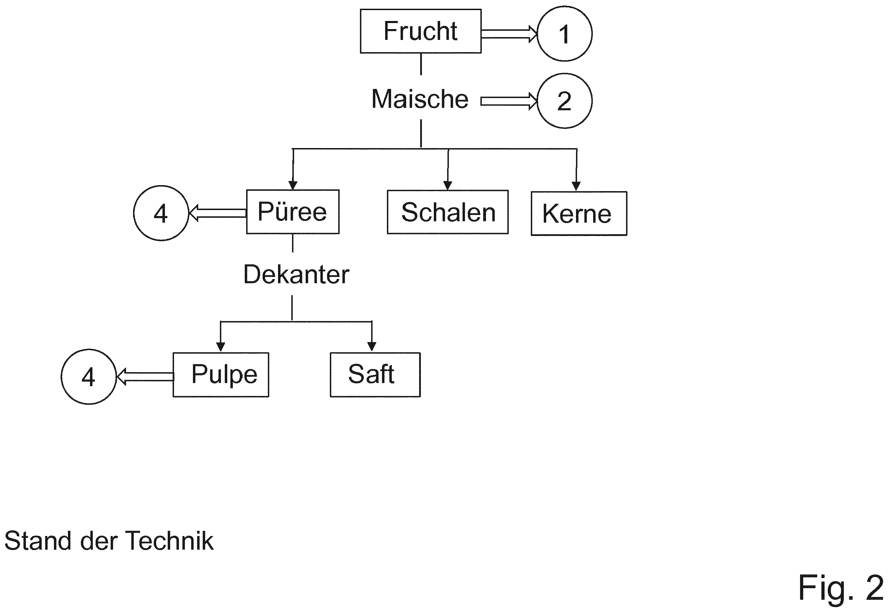

Die Figuren 1 und 2 zeigen übliche Verfahren zur Herstellung von Fruchtsaft, Püree und Pulpe. Mit den Ziffern 1, 2, 3 und 4 sind darin die Stellen beziehungsweise die Produkte gekennzeichnet, die im Rahmen des erfindungsgemäßen Verfahrens zu einem Fruchtprodukt verarbeitet werden können.

Bei der Saftherstellung gemäß Figur 1 wird aus Früchten insbesondere durch Zerkleinern eine Maische hergestellt, aus der Direktsaft, der sogenannte A-Saft, abgepresst wird, wobei der A-Trester zurückbleibt. Um die Saftausbeute zu erhöhen kann der A-Trester mit Wasser und Enzymen versetzt werden. Bei der Gewinnung des sogenannten B-Saftes aus diesem Ansatz bleibt der B-Trester zurück. Sowohl die ganze Frucht als auch die Maische, der A-Trester und der B-Trester können als Ausgangsmaterial für das erfindungsgemäße Verfahren eingesetzt werden. Dies gilt auch für in analoger Weise zum B-Saft und B-Trester erzeugten weiteren Saftkomponenten und zugehörigen Trestern.

Bei der Produktion von Fruchtprodukten gemäß Figur 2 wird aus Früchten insbesondere durch Zerkleinern eine Maische hergestellt. Durch Passieren wird aus der Maische ein Püree erhalten, und dazu aus der Frucht die Schalen, Kerne und Stiele abgetrennt. Das Püree kann, beispielsweise in einem Dekanter, in Pulpe und Saft aufgetrennt werden. Sowohl die ganze Frucht als auch die Maische, das Püree und die Pulpe können als Ausgangsmaterial für das erfindungsgemäße Verfahren eingesetzt werden.

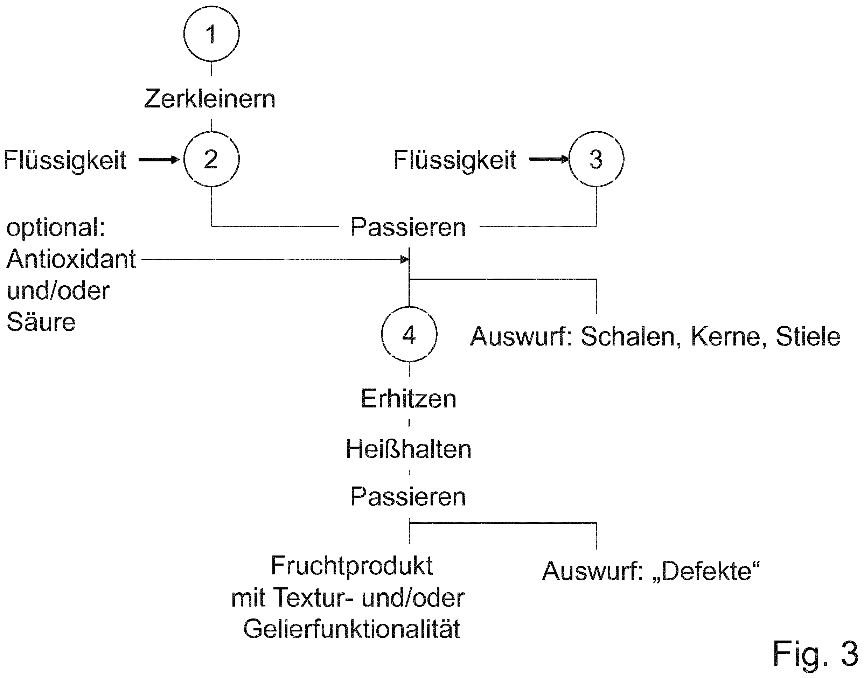

Figur 3 zeigt ein Fließschema des erfindungsgemäßen Verfahrens bis zum Erhalt des Fruchtproduktes mit Textur- und Gelierfunktionalität. Das Verfahren setzt grundsätzlich zerkleinertes Fruchtmaterial in fließ- beziehungsweise pumpfähigen Zustand ein, wie etwa Püree 4 oder Pulpe 4. Diese Masse aus Früchten und/oder zerkleinerten Früchten ohne deren Schalen, Kerne und Stiele wird so lange heiß gehalten, dass in dem Fruchtmaterial die Pektine in einen Zustand versetzt werden, indem sie viskositätserhöhend bis hin zu gelbildend wirken können. Dazu erfolgt erfindungsgemäß ein Heißhalten beispielsweise bei einer Temperatur von mindestens 95°C über einen Zeitraum von typischerweise 90 Minuten.

Das entstehende Fruchtprodukt mit Textur- und Gelierfunktionalität kann in einem auf das Heißhalten folgenden Passierschritt von Defekten befreit werden. Dabei handelt es sich je nach verwendeten Früchten beispielsweise häufig um Reste von Kerngehäusen.

Die Erfindung bietet mehrere Möglichkeiten, das Verfahren in bestehende Produktionslinien der Fruchtverarbeitung zu integrieren. Beispielsweise kann dabei zunächst ausgehend von dem reinen Fruchtmaterial 1 durch Zerkleinern und Zugabe von Flüssigkeit wie Wasser, Saft oder Saftkonzentrat eine Maische 2 hergestellt werden. Aus dieser werden Schalen, Kerne und Stiele in einem Passierschritt in einem Sieb mit einer Lochweite von beispielsweise 2 mm entfernt, und so zerkleinertes Fruchtmaterial 4 bereitgestellt. Zusätzlich oder alternativ kann Trester 3 mit Flüssigkeit wie Wasser, Saft oder Saftkonzentrat versetzt werden, um nach einem oben beschriebenen Passierschritt zerkleinertes Fruchtmaterial 4 bereitzustellen.

Im Rahmen der Erfindung kann dabei optional vor oder nach dem Abtrennen der nicht-essbaren Bestandteile ein Antioxidationsmittel wie beispielsweise Ascorbinsäure zugegeben werden. Die Erfindung bietet somit die Möglichkeit, das Fruchtprodukt hinsichtlich einer ansprechenden Farbe zu stabilisieren, indem so die enzymatische Bräunung reduziert wird.

Um je nach eingesetzten Früchten, insbesondere beim Einsatz von Gemüse, die Aktivierung der Protopektine zu ermöglichen und Makromoleküle vor dem Zerfall beim Heißhalten zu schützen, kann optional vor oder nach dem Abtrennen der nicht-essbaren Bestandteile eine Säure wie beispielsweise Zitronensäure zugegeben und so der pH-Wert insbesondere auf 3,6 eingestellt werden.

Nach der Aktivierung der Pektine im erfindungsgemäßen Heißhalteschritt kann zur Abtrennung von Defekten ein Passieren über ein Sieb der Weite 0,5 mm erfolgen. Damit ist die Herstellung des Fruchtproduktes mit Textur- und Gelierfunktionalität im Wesentlichen abgeschlossen.

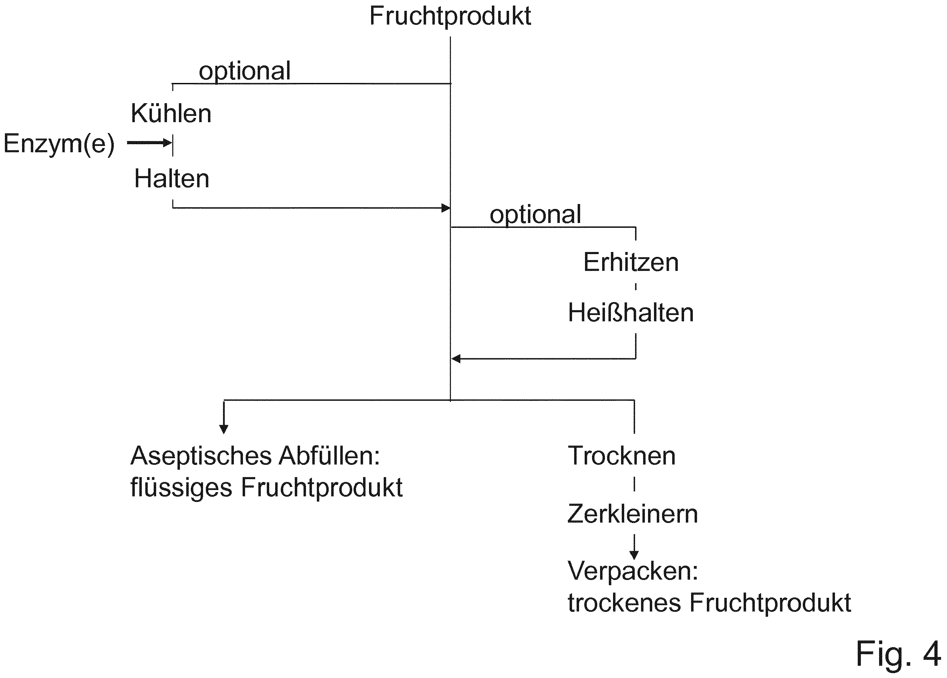

Das Fruchtprodukt kann dann - wie in Figur 4 illustriert - weiter konfektioniert werden, indem beispielsweise nach einem Abkühlen auf eine Temperatur von 35°C eine Enzymbehandlung mit mindestens einem Enzym mit Pektin-Methylesterase (PME) Aktivität während einer Haltezeit von typischerweise 120 Minuten erfolgt. Zusätzlich oder alternativ kann ein weiteres Erhitzen und Heißhalten erfolgen, das dem Pasteurisieren beziehungsweise der Inaktivierung der zugesetzten Enzyme dient. Durch eine Inaktivierung auch der fruchteigenen Enzyme (zum Beispiel Oxidasen) wird eine entsprechende Bräunung der Fruchtprodukte mit Textur- und Gelierungsfunktionalität verhindert.

Soll ein flüssiges Fruchtprodukt mit Textur- und Gelierungsfunktionalität hergestellt werden, wird das gegebenenfalls pasteurisierte Fruchtprodukt unter aseptischen Bedingungen in dafür geeignete Gebinde abgefüllt. Soll ein trockenes Fruchtprodukt mit Textur- und Gelierungsfunktionalität hergestellt werden, wird das gegebenenfalls pasteurisierte Fruchtprodukt in einem geeigneten Trockner getrocknet und im Anschluss vermahlen und verpackt.

Mit Hilfe der Erfindung können durch das beschriebene Verfahren grundsätzlich vier unterschiedliche Fruchtprodukte mit Textur- und Gelierfunktionalität erzeugt werden:
- "Fruchtprodukt, nicht enzymiert, nass (benannt als Produkt "A"), beispielsweise ausgehend von einer Mischung aus Trester und Wasser unter Abtrennung von Schalen, Kernen, Stielen sowie Defekten, Pasteurisierung und aseptischer Abfüllung,
- "Fruchtprodukt, nicht enzymiert, getrocknet (benannt als Produkt "B")", beispielsweise ausgehend von einer Mischung aus Trester und Wasser unter Abtrennung von Schalen, Kernen, Stielen sowie Defekten, Pasteurisierung und Trocknung, Zerkleinerung und Verpackung,
- "Fruchtprodukt, enzymiert, nass (benannt als Produkt "C")", beispielsweise ausgehend von einer Mischung aus Trester und Wasser unter Abtrennung von Schalen, Kernen, Stielen sowie Defekten, Kühlung und Behandlung mit PME, Pasteurisierung und aseptischer Abfüllung und
- "Fruchtprodukt, enzymiert, getrocknet (benannt als Produkt "D")": beispielsweise ausgehend von einer Mischung aus Trester und Wasser unter Abtrennung von Schalen, Kernen, Stielen sowie Defekten, Kühlung und Behandlung mit PME, Pasteurisierung und Trocknung, Zerkleinerung und Verpackung.

Die Pektine in den Produkten "A" und "B" besitzen ihren natürlichen Veresterungsgrad von üblicherweise größer als 50 %. Die Pektine der Produkte "C" und "D" haben durch die enzymatische Modifikation einen Veresterungsgrad von üblicherweise kleiner als 50 %. Gerade für die Produkte "C" und "D" können im Rahmen der Erfindung Unterabstufungen für den Veresterungsgrad eingestellt werden. Dies kann zum Beispiel erfolgen als "Produkt "C.1"" mit einem Veresterungsgrad im Bereich zwischen 35 % und 40 % und "Produkt "C.2"" mit einem Veresterungsgrad im Bereich zwischen 30 % und 34 %.

Die Produkte "A" und "B" besitzen unter anderem die Fähigkeit, in Fruchtzubereitungen mit einer relativen Dichte größer als etwa 60° Brix und in Anwesenheit von Säure zu gelieren. Die Produkte "C" und "D" hingegen besitzen unter anderem die Fähigkeit, in Anwesenheit von divalenten Ionen in Fruchtzubereitungen mit einer relativen Dichten unterhalb von etwa 55° Brix zu gelieren.

In den vier nachfolgend beschriebenen Ausführungsbeispielen wird immer eine Referenz mit drei unterschiedlichen apfelbasierten Pulvern verglichen. Die apfelbasierten Pulver werden innerhalb einer Beispielrezepturart jeweils in gleicher Menge eingesetzt. In der Referenz wird diese Pulvermenge durch Zucker bzw. Rübensirup ersetzt. Das erfindungsgemäße Produkt ist das Apfelfruchtpulver.

Apfelpulver wird hergestellt aus getrockneten, ungeschälten oder geschälten Äpfeln. Apfelfasern werden hergestellt aus getrocknetem Apfeltrester und besitzen üblicherweise einen Ballaststoffgehalt von > 50 %.

Apfelpulver besitzen üblicherweise ein "Kohlenhydrat zu Ballaststoff"-Verhältnis (Berechnet über Gesamtgehalt an verdaulichen Kohlenhydraten (also Saccharose, Fructose, Glucose, Stärke und/oder Zuckeralkohole) geteilt durch den Gehalt an Ballaststoffen) von größer 5,0, Apfelfasern besitzen üblicherweise ein "Kohlenhydrat zu Ballaststoff"-Verhältnis von 0,0 bis 0,6.

Das erfindungsgemäße Fruchtprodukt besitzt üblicherweise ein "Kohlenhydrat zu Ballaststoff"-Verhältnis von mindestens 0,6 bis höchstens 4,7

Die folgende Tabelle 1 gibt die Zusammensetzung der drei untersuchten apfelbasierten Pulver in Gew.-% an.

| | Apfelpulver | Apfelfaser | Apfelfruchtpulver |
|---|---|---|---|
| Fett | 0,95 | 0,5 | 0,4 |
| Kohlenhydrate | 81,5 | 23 | 37,7 |
| Protein | 1,3 | 3 | 3,3 |
| Ballaststoffe | 12 | 60 | 34,3 |
| Salz | 0,02 | 0,01 | 0,05 |
| Kohlenhydrate: Ballaststoffe | 6,8 | 0,38 | 1,1 |

Für die Viskositätsmessungen wurden folgende Methoden eingesetzt.

### Viskositätsmessung

für "Erdbeerfruchtaufstrich", "Erdbeerfruchtzubereitung 1" und "Erdbeerfruchtzubereitung 2"
1. Einfüllen von 330 mL Probe in ein 400 mL Becherglas.
2. Temperieren des Becherglases inkl. Probe auf 20 °C in einem Temperierbad.
3. Messen der Viskosität der Probe mittels Brookfield DV-II Viskosimeter mit Spindel S62 bei 50 Umdrehungen pro Minute; Der Messwert wird nach 60 Sekunden Drehdauer der Spindel abgelesen.

### Viskositätsmessung für "BBQ Sauce"

1. Einfüllen von 15 mL Probe in den Becher CC27/SS/AIR (Anton Paar).
2. Temperieren des Bechers inkl. Probe durch die Temperiereinrichtung des Rheometers Anton Paar MCR102 auf 20°C.
3. Messer der Viskosität der Probe mit Messzylinder CC27 bei einer Scherrate von 30 1/s.

### Ausführungsbeispiel "Erdbeerfruchtaufstrich"

Die Rezeptur des Erdbeerfruchtaufstrichs mit der Variation zwischen Zucker (Referenz), Apfelpulver, Apfelfaser und erfindungsgemäßem Apfelfruchtpulver ist in der folgenden Tabelle 2 wiedergegeben. Alle Angaben sind in g (Gramm).

| | Referenz | Apfelpulver | Apfelfaser | Apfelfruchtpulver |
|---|---|---|---|---|
| Erdbeerpüree (7,65 °Bx.; 0,9 % Säure) | 700 | 700 | 700 | 700 |
| Traubensaft-Konzentrat (65,0 °Bx.; 0,05 % Säure) | 266 | 266 | 266 | 266 |
| Erdbeersaft-Konzentrat (66,3 °Bx.; 6,5 % Säure) | 9 | 9 | 9 | 9 |
| Zitronensaft-Konzentrat (58,0 °Bx.; 39,2 % Säure) | 2 | 2 | 2 | 2 |
| Zucker, kristallin | 185,6 | 144,1 | 144,1 | 144,1 |
| Apfelpulver | 0 | 41,5 | 0 | 0 |
| Apfelfaser | 0 | 0 | 41,5 | 0 |
| Apfelfruchtpulver | 0 | 0 | 0 | 41,5 |

Die Herstellung des Referenz-Erdbeerfruchtaufstrichs hat folgende Schritte:
- Mischen von 20 % des Erdbeerpürees und 75 % des Traubensaftkonzentrats mit 25 % des Zuckers
- Erhitzen auf 95°C
- Hinzugabe des restlichen Erdbeerpürees, des restlichen Traubensaftkonzentrats und des restlichen Zuckers
- Eindampfen auf Zielbrix (43° Brix)
- Hinzugabe des gesamten Zitronensaft- und Erdbeersaftkonzentrats
- Abfüllen der Fruchtzubereitung

Die Herstellung der Erdbeerfruchtaufstriche mit den Apfelbasierten Pulvern hat folgende Schritte:
- Mischen von 20 % des Erdbeerpürees und 75 % des Traubensaftkonzentrats mit der Gesamtmenge an Pulver
- Erhitzen auf 95 °C
- Hinzugabe des restlichen Erdbeerpürees, des restlichen Traubensaftkonzentrats und des gesamten Zuckers
- Eindampfen auf Zielbrix (43 °Bx.)
- Hinzugabe des gesamten Zitronensaft- und Erdbeersaftkonzentrats
- Abfüllen der Fruchtzubereitung

Die Ergebnisse der Viskositätsmessungen sind in der folgenden Tabelle 3 wiedergegeben.

| | Referenz | Apfelpulver | Apfelfaser | Apfelfruchtpulver |
|---|---|---|---|---|
| Viskosität in mPas | 1626 | 4155 | 4810 | 8875 |

Die Viskosität des Erdbeerfruchtaufstrichs mit dem erfindungsgemäßen Apfelfruchtpulver ist damit 2,lfach höher als die Viskosität, welche durch Zusatz des Apfelpulvers erzielt wurde, und 1,9fach höher als die Viskosität, welche durch Zusatz der Apfelfasern erzielt wurde.

### Ausführungsbeispiel "BBQ-Sauce"

Die Rezeptur des Erdbeerfruchtaufstrichs mit der Variation zwischen Rübensirup (Referenz), Apfelpulver, Apfelfaser und erfindungsgemäßem Apfelfruchtpulver ist in der folgenden Tabelle 4 wiedergegeben. Alle Angaben sind in g (Gramm).

| | Referenz | Apfelpulver | Apfelfaser | Apfelfruchtpulver |
|---|---|---|---|---|
| Paprikapüree (7,6 °Bx.; 0,3 % Säure) | 40,40 | 40,40 | 40,40 | 40,40 |
| Zwiebelwürfel, frisch | 17,40 | 17,40 | 17,40 | 17,40 |
| Rübensirup (82 °Bx.) | 18,50 | 14,80 | 14,80 | 14,80 |
| Apfelpüree (12,6 °Bx.; 0,4 % Säure) | 2,50 | 2,50 | 2,50 | 2,50 |
| Essig (5 % Säure) | 11,30 | 11,30 | 11,30 | 11,30 |
| Salz | 2,10 | 2,10 | 2,10 | 2,10 |
| Gewürze | 0,60 | 0,60 | 0,60 | 0,60 |
| Apfelpulver | 0,00 | 3,70 | 0,00 | 0,00 |
| Apfelfaser | 0,00 | 0,00 | 3,70 | 0,00 |
| Apfelfruchtpulver | 0,00 | 0,00 | 0,00 | 3,70 |
| Wasser | 7,20 | 7,20 | 7,20 | 7,20 |

Die Herstellung der Referenz-BBQ-Sauce hat folgende Schritte:
- Mischen aller getrockneten Zutaten (Salz und Gewürze) in einem ersten Gefäß
- Mischen der restlichen Zutaten (Paprikapüree, Zwiebeln, heller Sirup, Apfelpüree, Wasser) in einem zweiten Gefäß
- Einrühren des Inhalts des ersten Gefäßes in den Inhalt des zweiten Gefäßes
- Erhitzen auf 95°C
- Mischen mit Stabmixer für 40 Sekunden
- Abkühlen auf 40°C unter Rühren
- Abfüllen

Die Herstellung der BBQ-Saucen mit den Apfel-basierten Pulvern hat folgende Schritte:
- Mischen aller getrockneten Zutaten (Salz, Gewürze und Pulvervariante) in ein erstes Gefäß
- Mischen der restlichen Zutaten (Paprikapüree, Zwiebeln, heller Sirup, Apfelpüree, Wasser) in ein zweites Gefäß
- Einrühren des Inhalts des ersten Gefäßes in den Inhalt des zweiten Gefäßes
- Erhitzen auf 95°C
- Mischen mit Stabmixer für 40 Sekunden
- Abkühlen auf 40 °C unter Rühren
- Abfüllen

Die Ergebnisse der Viskositätsmessungen sind in der folgenden Tabelle 5 wiedergegeben.

| | Referenz | Apfelpulver | Apfelfaser | Apfelfruchtpulver |
|---|---|---|---|---|
| Viskosität in mPas | 296 | 439 | 1349 | 1559 |

Die Viskosität der BBQ-Sauce mit dem erfindungsgemäßen Apfelfruchtpulver ist damit 3,6fach höher als die Viskosität, welche durch Zusatz des Apfelpulvers erzielt wurde, und 1,16fach höher als die Viskosität, welche durch Zusatz der Apfelfasern erzielt wurde.

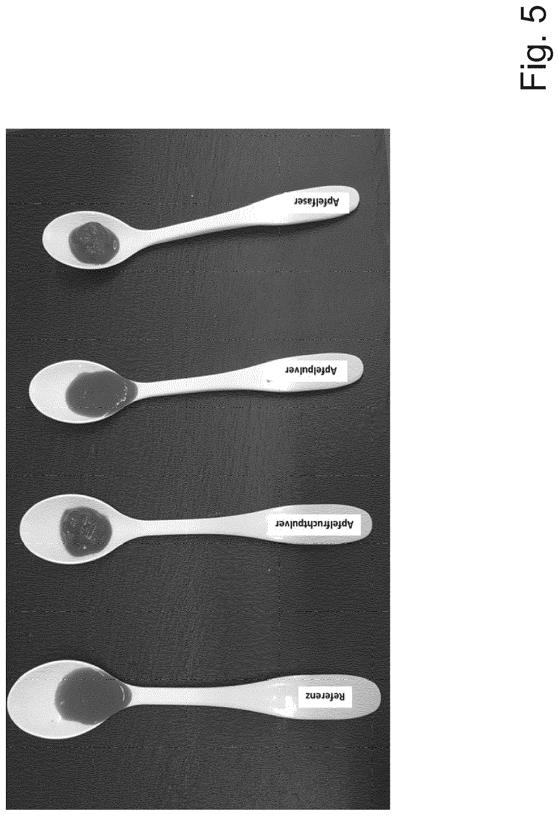

In Figur 5 sind fotografische Aufnahmen der oben beschriebenen BBQ-Saucen gezeigt. Im Vergleich der Proben ist mit bloßem Auge die hohe Festigkeit der Sauce mit dem erfindungsgemäßen Apfelfruchtpulver im Vergleich zur Sauce allein mit Rübensirup (Referenz) und mit Apfelpulver zu erkennen.

### Ausführungsbeispiel "Erdbeerfruchtzubereitung 1"

Die Rezeptur der "Erdbeerfruchtzubereitung 1" mit der Variation zwischen Zucker (Referenz), Apfelpulver, Apfelfaser und erfindungsgemäßem Apfelfruchtpulver ist in der folgenden Tabelle 6 wiedergegeben. Alle Angaben sind in g (Gramm).

| | Referenz | Apfelpulver | Apfelfaser | Apfelfruchtpulver |
|---|---|---|---|---|
| Erdbeerpüree (7,65 °Bx.; 0,9 % Säure) | 800 | 800 | 800 | 800 |
| Erdbeersaft-Konzentrat (66,3 °Bx.; 6,5 % Säure) | 17 | 17 | 17 | 17 |
| Zitronensaft-Konzentrat (58,0 °Bx.; 39,2 % Säure) | 4 | 4 | 4 | 4 |
| Zucker, kristallin | 259 | 219 | 219 | 219 |
| Apfelpulver | 0 | 40 | 0 | 0 |
| Apfelfaser | 0 | 0 | 40 | 0 |
| Apfelfruchtpulver | 0 | 0 | 0 | 40 |
| Wasser | 17 | 17 | 17 | 17 |

Die Herstellung der Referenz-"Erdbeerfruchtzubereitung 1" hat folgende Schritte:
- Mischen von Wasser, Zitronensaft-Konzentrat und Erdbeerpüree in einem Gefäß
- Erhitzen auf 95°C
- Hinzufügen des Zuckers
- Eindampfen auf Zielbrix (35°Brix)
- Hinzufügen des Erdbeersaft-Konzentrats
- Abkühlen auf 40 °C unter Rühren
- Abfüllen

Die Herstellung der "Erdbeerfruchtzubereitungen 1" mit den Apfel-basierten Pulvern hat folgende Schritte:
- Mischen von Wasser, Zitronensaft-Konzentrat, Erdbeerpüree und Pulvervariante in einem Gefäß
- Erhitzen auf 95 °C
- Hinzufügen des Zuckers
- Eindampfen auf Zielbrix (35° Brix)
- Hinzufügen des Erdbeersaft-Konzentrats
- Abkühlen auf 40°C unter Rühren
- Abfüllen

Die Ergebnisse der Viskositätsmessungen sind in der folgenden Tabelle 7 wiedergegeben.

| | Referenz | Apfelpulver | Apfelfaser | Apfelfruchtpulver |
|---|---|---|---|---|
| Viskosität in mPas | 1686 | 7028 | 2845 | 10190 |

Die Viskosität der "Erdbeerfruchtzubereitung 1" mit dem erfindungsgemäßen Apfelfruchtpulver ist damit 1,45fach höher als die Viskosität, welche durch Zusatz des Apfelpulvers erzielt wurde, und 3,58fach höher als die Viskosität, welche durch Zusatz der Apfelfasern erzielt wurde.

### Ausführungsbeispiel "Erdbeerfruchtzubereitung 2"

Die Rezeptur der "Erdbeerfruchtzubereitung 2" mit der Variation zwischen Zucker (Referenz), Apfelpulver, Apfelfaser und erfindungsgemäßem Apfelfruchtpulver ist in der folgenden Tabelle 8 wiedergegeben. Alle Angaben sind in g (Gramm).

| | Referenz | Apfelpulver | Apfelfaser | Apfelfruchtpulver |
|---|---|---|---|---|
| Erdbeerpüree (7,65 °Bx.; 0,9 % Säure) | 400 | 400 | 400 | 400 |
| Zucker, kristallin | 315 | 277 | 277 | 277 |
| Magermilchpulver (35 % Protein) | 5,70 | 5,7 | 5,7 | 5,7 |
| Apfelpulver | 0 | 38 | 0 | 0 |
| Apfelfaser | 0 | 0 | 38 | 0 |
| Apfelfruchtpulver | 0 | 0 | 0 | 38 |
| Wasser | 280 | 280 | 280 | 280 |

Die Herstellung der Referenz-"Erdbeerfruchtzubereitung 2" hat folgende Schritte:
- Mischen von 36 % des Erdbeerpürees und 78 % des Wassers in einem ersten Gefäß
- Erhitzen auf 95°C
- Hinzufügen des restlichen Erdbeerpürees und des gesamten Zuckers
- Mischen des restlichen Wassers und des Magermilchpulvers in einem zweiten Gefäß
- Einrühren des Inhalts des zweiten Gefäßes in das erste Gefäß
- Abkühlen auf 40°C unter Rühren
- Abfüllen

Die Herstellung der "Erdbeerfruchtzubereitungen 2" mit den Apfel-basierten Pulvern hat folgende Schritte:
- Mischen von 36 % des Erdbeerpürees und 78 % des Wassers in einem ersten Gefäß
- Erhitzen auf 95°C
- Hinzufügen der Pulvervariante unter Rühren
- Hinzufügen des restlichen Erdbeerpürees und des gesamten Zuckers
- Mischen des restlichen Wassers und des Magermilchpulvers in einem zweiten Gefäß
- Einrühren des Inhalts des zweiten Gefäßes in das erste Gefäß
- Abkühlen auf 40 °C unter Rühren
- Abfüllen

Die Ergebnisse der Viskositätsmessungen sind in der folgenden Tabelle 9 wiedergegeben.

| | Referenz | Apfelpulver | Apfelfaser | Apfelfruchtpulver |
|---|---|---|---|---|
| Viskosität in mPas | 402 | 1229 | 954 | 5660 |

Die Viskosität der "Erdbeerfruchtzubereitung 2" mit dem erfindungsgemäßen Apfelfruchtpulver ist damit 4,6fach höher als die Viskosität, welche durch Zusatz des Apfelpulvers erzielt wurde, und 5,9fach höher als die Viskosität, welche durch Zusatz der Apfelfasern erzielt wurde.

Für die "Erdbeerfruchtzubereitung 2" wurde die Backstabilität mit folgender Methode bewertet:
1. Platzieren eines Metallrings (9 mm Höhe, 34 mm Durchmesser) auf einem mit Backpapier bedeckten Backblech.
2. Einfüllen von 10 g Probe in den Metallring.
3. Entfernen des Metallrings.
4. Backen der Probe bei 200 °C Ober-/Unterhitze für 8 Minuten.
5. Beurteilung des "Zerlaufens" der Probe.

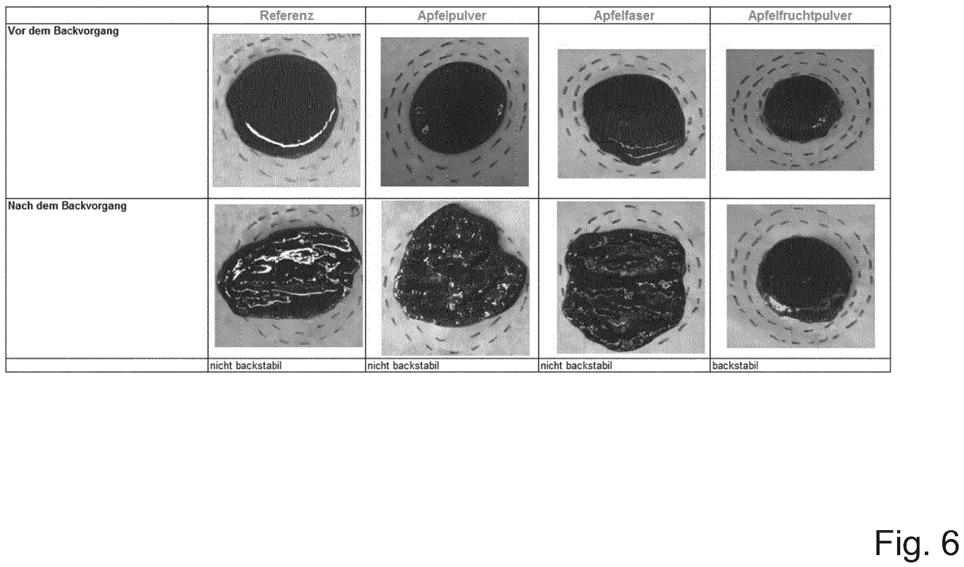

In Figur 6 sind die fotografische Auswertung der Untersuchungen zur Backstabilität gezeigt. Alleine die Probe der "Erdbeerfruchtzubereitung 2", die mit dem erfindungsgemäßen Apfelfruchtpulver hergestellt wurde, zeigt nahezu keine Veränderungen in ihrer räumlichen Ausdehnung nach dem Backvorgang im Vergleich zu vor dem Backvorgang.

Es ist dem Fachmann ersichtlich, dass die Erfindung nicht auf die vorstehend beschriebenen Beispiele beschränkt ist, sondern vielmehr in vielfältiger Weise variiert werden kann. Insbesondere können die Merkmale der einzeln dargestellten Beispiele auch miteinander kombiniert oder gegeneinander ausgetauscht werden.

## Patentansprüche

1. Verfahren zum Herstellen eines Fruchtproduktes mit folgenden Schritten
a) Bereitstellen einer Masse aus Früchten und/oder zerkleinerten Früchten ohne deren Schalen, Kerne und/oder Stiele,
b) Heißhalten der erhitzten Masse bei einer Temperatur oberhalb von 75°C; bevorzugt oberhalb von 80°C, besonders bevorzugt im Bereich zwischen 94°C und 96°C, über einen Zeitraum im Bereich zwischen 45 Minuten und 180 Minuten, bevorzugt im Bereich zwischen 50 Minuten und 150 Minuten, besonders bevorzugt im Bereich zwischen 60 Minuten und 120 Minuten.

2. Verfahren nach Anspruch 1,
wobei in Schritt a) ein Abtrennen von nicht-essbaren Bestandteilen und Schalen aus der Masse aus Früchten und/oder zerkleinerten Früchten erfolgt, insbesondere durch Passieren mit einer Siebweite unterhalb von 5 mm, bevorzugt durch Passieren mit einer Siebweite unterhalb von 3 mm, besonders bevorzugt durch Passieren mit einer Siebweite von 2 mm.

3. Verfahren nach einem der vorstehenden Ansprüche,
wobei vor Schritt b) ein Erhitzen der Masse aus Früchten und/oder zerkleinerten Früchten auf eine Temperatur oberhalb von 75°C, bevorzugt oberhalb von 80°C; besonders bevorzugt oberhalb von 95°C, insbesondere im Bereich zwischen 95°C und 98°C, erfolgt.

4. Verfahren nach einem der vorstehenden Ansprüche,
wobei in Schritt a) eine Säurezugabe zum Einstellen des pH-Wertes erfolgt,
wobei insbesondere ein pH-Wert im Bereich zwischen 3 und 4, bevorzugt ein pH-Wert von 3,6 in der Masse aus Früchten und/oder zerkleinerten Früchten eingestellt wird,
und wobei als Säure bevorzugt Zitronensäure verwendet wird.

5. Verfahren nach einem der vorstehenden Ansprüche,
wobei in Schritt a) das Bereitstellen der Masse aus Früchten und/oder zerkleinerten Früchten unter Bedingungen erfolgt, die einer enzymatischen Bräunung der Masse entgegenwirken,
wobei bevorzugt zumindest ein Antioxidationsmittel, besonders bevorzugt Ascorbinsäure, der Masse zugesetzt und/oder die Masse unter Inertgasatmosphäre verarbeitet wird.

6. Verfahren nach einem der vorstehenden Ansprüche,
wobei in Schritt a) als Masse aus Früchten und/oder zerkleinerten Früchten eine Mischung aus Trester und einem Fluid bereitgestellt wird,
wobei das Fluid insbesondere ausgewählt ist aus der Gruppe, welche Wasser, Saft, Püree, Pulpe, Saftkonzentrat und Kondensat aus der Herstellung konzentrierten Saftes sowie Mischungen aus den genannten Fluiden umfasst.

7. Verfahren nach einem der vorstehenden Ansprüche mit dem weiteren Schritt
c) Abtrennen von restlichen nicht-essbaren Bestandteilen aus dem Fruchtprodukt, bevorzugt durch Passieren mit einer Siebweite unterhalb von 1 mm, besonders bevorzugt durch Passieren mit einer Siebweite von 0,5 mm.

8. Verfahren nach einem der vorstehenden Ansprüche mit dem weiteren Schritt
e) Durchführen einer Enzymbehandlung, insbesondere zur Entesterung des Pektins, wobei bevorzugt dem Fruchtprodukt zumindest ein Enzym mit Pektin-Methylesterase (PME)-Aktivität zugesetzt wird.

9. Verfahren nach einem der vorstehenden Ansprüche mit dem weiteren Schritt
d) Abkühlen des Fruchtproduktes nach dem Heißhalten auf eine Temperatur unterhalb von 40°C, bevorzugt auf eine Temperatur im Bereich von 30°C bis 40°C, besonders bevorzugt auf eine Temperatur im Bereich von 33°C bis 37°C, insbesondere auf eine Temperatur von 35°C.

10. Fruchtprodukt, insbesondere hergestellt mit einem Verfahren nach einem der vorstehenden Ansprüche,
umfassend im Wesentlichen alle wasserunlöslichen Bestandteile einer Frucht oder einer Mischung aus Früchten außer deren nicht-essbaren Bestandteilen, insbesondere außer Schalen, Kernen und Stielen,
wobei das Fruchtprodukt ein "Kohlenhydrat zu Ballaststoff"-Verhältnis im Bereich von 0,6 bis 4,7, bevorzugt im Bereich von 0,6 bis 3,5, besonders bevorzugt im Bereich von 0,6 bis 2,5 hat.

11. Fruchtprodukt nach Anspruch 10,
**dadurch gekennzeichnet, dass**
das Fruchtprodukt ein Verhältnis von löslichen Ballaststoffen zu unlöslichen Ballaststoffen im Bereich von 0,15 bis 1,5, bevorzugt im Bereich von 0,25 bis 1,1, besonders bevorzugt im Bereich von 0,35 bis 1,0 auf.

12. Fruchtprodukt nach Anspruch 10 oder 11,
**dadurch gekennzeichnet, dass**
das Fruchtprodukt ein Apfelfruchtprodukt ist und im Vergleich mit einem Apfelpulver hergestellt aus getrockneten ungeschälten oder geschälten Äpfeln bei gleicher eingesetzter Menge in einem Endprodukt zu einer um das 1,45-fache bis zu einer um das 4,6-fache erhöhten Viskosität des Endproduktes führt.

13. Fruchtprodukt nach einem der Ansprüche Anspruch bis 12,
**dadurch gekennzeichnet, dass**
das Fruchtprodukt ein Apfelfruchtprodukt ist und im Vergleich zu Apfelfasern hergestellt aus getrocknetem Apfeltrester bei gleicher eingesetzter Menge in einem Endprodukt zu einer um das 1,16-fache bis zu einer um das 6-fache erhöhten Viskosität des Endproduktes führt.

14. Fruchtprodukt nach einem der Ansprüche 10 bis 13, dad
urch gekennzeichnet, dass
das Fruchtprodukt ein
Apfelfruchtprodukt ist und
dass eine Probe von 10 g eines das Apfelfruchtprodukt enthaltende Endprodukt nach 8 Minuten Backen bei 200°C Ober-/Unterhitze in ihrer räumlichen Ausdehnung im Wesentlichen unverändert ist.

15. Verwendung eines Fruchtproduktes nach einem der Ansprüche 10 bis 14
als texturgebende Komponente eines Lebensmittels, welches insbesondere aus der Gruppe ausgewählt ist, die Fruchtzubereitungen, Fruchtaufstriche und Saucen, Getränke, Backwaren, Eiszubereitungen und Süßwaren umfasst.
